# EUROPÄISCHE PATENTSCHRIFT

(11) **EP 0 407 793 B1**
(45) Veröffentlichungstag und Bekanntmachung des Hinweises auf die Patenterteilung: **24.08.1994**
(21) Anmeldenummer: 90111953.7
(22) Anmeldetag: 23.06.1990
(51) Int. Cl.: D06F 37/20, F16F 7/08

(54) **Reibungsdämpfer**
Friction damper
Amortisseur à friction

(30) Priorität: 13.07.1989 DE 3923087
(43) Veröffentlichungstag der Anmeldung: 16.01.1991
(73) Patentinhaber: SUSPA COMPART Aktiengesellschaft, D-90518 Altdorf (DE)
(72) Erfinder: Bauer, Hans-Peter, D-8503 Altdorf (DE); Bauer, Hans Jürgen, D-8503 Altdorf (DE); Stadelmann, Ludwig, D-8503 Altdorf (DE)
(74) Vertreter: Rau, Manfred, Dr. Dipl.-Ing.

(56) Entgegenhaltungen:
- DE-A- 3 604 286

## Beschreibung

Die Erfindung betrifft einen Reibungsdämpfer, insbesondere für Waschmaschinen mit Schleudergang, bestehend aus einem im wesentlichen kreiszylindrischen Gehäuse und einem koaxial in diesem verschiebbaren, mit einem Ende aus dem Gehäuse herausgeführten und am anderen Ende mit einem etwa zylindrischen Reibungskolben versehenen Stößel, wobei der Reibungskolben mindestens einen etwa kreiszylindrischen Auflage-Abschnitt und diesen radial überragende und axial abstandsunveränderbar begrenzende Gegenhalteflansche aufweist, wobei auf dem Auflage-Abschnitt und zwischen den Gegenhalteflanschen ein elastisch gegen die Innenwand des Gehäuses angedrückter Reibungsbelag aus elastisch nachgiebigem Material angeordnet ist, und wobei am Reibungskolben eine Schmierfett-Vorratskammer ausgebildet ist.

Derartige Reibungsdämpfer sind aus der DE-OS 36 04 286 (entspr. U.S. Patent 4 729 458) bekannt. Diese geschmierten Reibungsdämpfer haben sich in der Praxis in großem Umfang außerordentlich bewährt; sie werden insbesondere in großem Maße in Waschmaschinen eingesetzt. Die Reibungsbeläge bestehen hierbei üblicherweise aus zelligem geschäumten Kunststoff, wobei die Zellen des Kunststoffes mit Fett imprägniert sind. Es hat sich gezeigt, daß bei extremen Belastungen nach längerer Zeit die Reibung von einer geschmierten in eine trockene Reibung übergeht, d.h. der Reibungsdämpfer erwärmt sich sehr stark. Um diese Schwierigkeit zu reduzieren, sind bereits an der Außenseite des Reibungskolbens in Form einer Ringnut ausgebildete Schmierfett-Kammern vorgesehen worden, in denen ein kleiner Vorrat von zusätzlichem Schmierfett vorgesehen ist. Auch diese Maßnahme hat nicht zu einer grundlegenden Beseitigung des Problems geführt.

Der Erfindung liegt daher die Aufgabe zugrunde, den Reibungsdämpfer der gattungsgemäßen Art so weiterzubilden, daß ein Abfall der Dämpfung durch Übergang von einer geschmierten in eine trockene Reibung ausgeschlossen wird.

Diese Aufgabe wird erfindungsgemäß dadurch gelöst, daß die Schmierfett-Vorratskammer innerhalb des Reibungskolbens ausgebildet und über jeweils mindestens einen Schmierfett-Kanal mit dem jeweiligen Auflage-Abschnitt verbunden ist.

Durch die erfindungsgemäß vorgesehene Schmierfett-Vorratskammer kann eine ständige Nach-Imprägnierung der Reibungsbeläge erfolgen. Das Schmierfett wandert durch die Schmierfett-Kanäle in kleinen Mengen zu den Reibungsbelägen und durch diese hindurch zur Reibfläche zwischen Reibungsbelag und Innenwand des Gehäuses.

Wenn nach einer vorteilhaften Ausgestaltung der Erfindung die Schmierfett-Vorratskammer durch einen im Reibungskolben befindlichen Einsatzkörper begrenzt wird, dann ist zum einen die Schmierfett-Kammer selber in einfacher Weise zu fertigen und insbesondere in einfacher Weise mit einer Fettfüllung im Reibungskolben zu montieren. Letzteres ist weiterhin in besonders einfacher Weise dann möglich, wenn einerseits der Einsatzkörper gegen die dem Innenraum des Gehäuses zugewandte Stirnseite des Stößels anliegt, und wenn andererseits der Einsatzkörper mittels widerhakenartiger, in Ausnehmungen des Stößels eingreifender Befestigungsstege mit dem Stößel elastisch verriegelt ist.

Um zu verhindern, daß Schmierfett aus der Vorratskammer in den Stößel und von dort nach außen gelangt, ist es von Vorteil, wenn der Einsatzkörper im Bereich seines dem Innenraum des Stößels zugewandten Endes gegenüber der Innenwand des Reibungskolbens abgedichtet ist.

Wenn der mindestens eine Schmierfett-Kanal einen Durchmesser von etwa 1,0 bis 1,5 mm aufweist, dann ist sichergestellt, daß der jeweilige Reibungsbelag sich nicht in den jeweiligen Schmierfett-Kanal hineindrückt, so daß wiederum auch verhindert wird, daß in diesem Bereich die Reibungskraft zwischen Reibungsbelag und Innenwand des Gehäuses abfällt.

Wenn gemäß einer weiteren vorteilhaften Ausgestaltung der Erfindung an dem im Gehäuse befindlichen Ende des Stößels ein Verlängerungsstutzen vorgesehen ist, der gemeinsam mit dem benachbarten Gegenhalteflansch und der Innenwand des Gehäuses eine Schmierfett-Sammelkammer begrenzt, wird verhindert, daß das Schmierfett sich im Gehäuse an nicht mit dem Reibungsbelag in Verbindung kommenden Stellen ablagert. Insbesondere wird verhindert, daß das Fett in den Hohlraum des Stößels gelangt, wo es nicht mehr zur Schmierung herangezogen würde. Des weiteren bestünde die Gefahr, daß in den Innenraum des Stößels gelangtes Fett durch im Stößel ausgebildete Öffnungen nach außen tritt. An der Innenwand des Gehäuses beim Ausfahren des Stößels aus dem Gehäuse verteiltes Schmierfett wird beim Einfahren des Stößels in das Gehäuse wieder eingesammelt. Der Verlängerungsstutzen kann am Einsatzkörper ausgebildet sein.

Wenn in weiterer Ausgestaltung der Erfindung der Reibungsbelag aus zelligem geschäumten Kunststoff und zwar insbesondere aus zumindest teilweise offenzelligem geschäumten Kunststoff besteht, dann wandert zum einen das Schmierfett durch den Reibungsbelag hindurch. Zum anderen tritt im Reibungsbelag eine Art Pumpwirkung durch die wechselnden Verformungen des Reibungsbelages während eines Arbeitszyklus ein, die auch zu einer Förderung des Schmierfettes durch den Reibungsbelag führt.

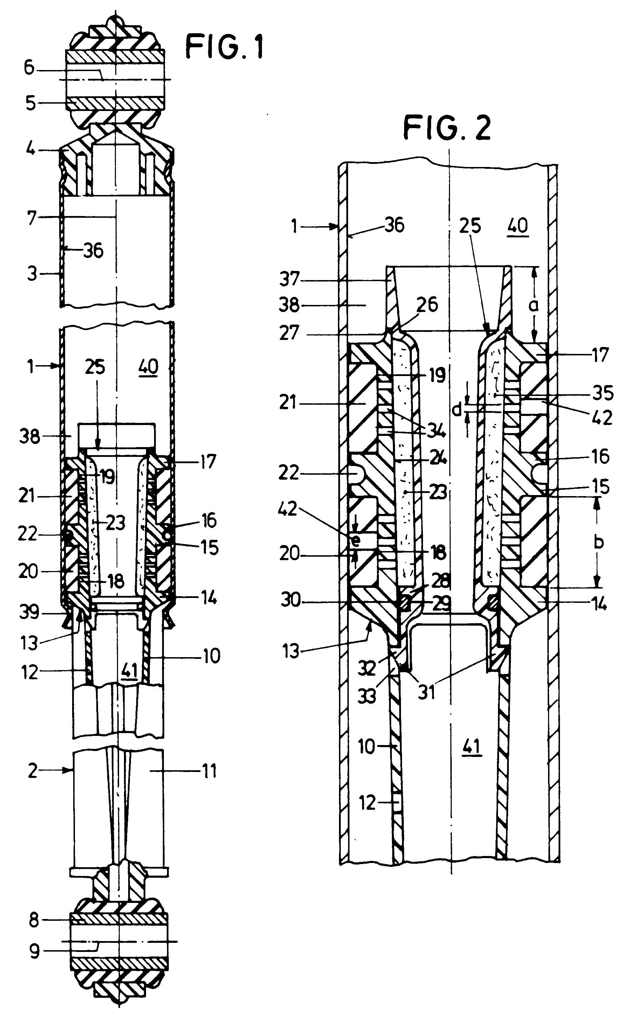

Weitere Einzelheiten der Erfindung ergeben sich aus der nachfolgenden Beschreibung eines Ausführungsbeispiels anhand der Zeichnung. Es zeigt
- Fig. 1: einen Reibungsdämpfer gemäß der Erfindung im Längsschnitt und
- Fig. 2: einen Teil-Längsschnitt des Reibungsdämpfers in gegenüber Fig. 1 vergrößertem Maßstab.

Der in der Zeichnung dargestellte Reibungsdämpfer weist ein Gehäuse 1 und einen Stößel 2 auf. Das Gehäuse 1 besteht im wesentlichen aus einem zylindrischen metallischen Rohr 3, das an einem Ende mittels eines Bodens 4 verschlossen ist. An der Außenseite des Bodens 4 ist eine Gelenkbüchse 5 zum Anlenken des Reibungsdämpfer angebracht. Diese Gelenkbüchse 5 weist eine als Schwenkachse dienende Symmetrieachse 6 auf, die die Mittel-Längs-Achse 7 des Reibungsdampfers senkrecht schneidet.

Der Stößel 2 weist an seinem äußeren Ende ebenfalls eine Gelenkbüchse 8 auf, deren Achse 9 ebenfalls die Mittel-Längs-Achse 7 senkrecht schneidet. Der Stößel 2 selber besteht im wesentlichen aus einem sich zur Gelenkbüchse 8 hin verjüngenden Rohr 10, das auf seiner Außenseite mittels Längsrippen 11 versteift ist. Das Rohr 10 ist mit einer Entlüftungsöffnung 12 versehen. Der Stößel 2 ist einstückig aus Kunststoff gespritzt.

Am im Gehäuse 1 befindlichen inneren Ende des Stößels 2 ist ein Reibungskolben 13 ausgebildet, der ringförmige, im Abstand voneinander ausgebildete und einander paarweise zugeordnete Gegenhalteflansche 14, 15 und 16, 17 aufweist. Zwischen den einander jeweils zugeordneten Gegenhalteflanschen 14, 15 bzw. 16, 17 sind etwa kreiszylindrische Auflage-Abschnitte 18, 19 ausgebildet, die ebenfalls konzentrisch zur Achse 7 angeordnet sind. Auf den Auflage-Abschnitten 18, 19 ist jeweils ein Reibungsbelag 20, 21 angeordnet. Diese Reibungsbeläge 20, 21 bestehen aus einem zelligen, elastischen Schaumstoff, beispielsweise einem Polyuretan-Schaumstoff.

Zwischen den beiden einander benachbarten Gegenhalteflanschen 15, 16, also auch zwischen den Reibungsbelägen 20, 21 ist eine im Verhältnis zum Volumen eines Reibbelages 20 bzw. 21 relativ kleinvolumige ringnutförmige Schmierfett-Kammer 22 ausgebildet.

An der Innenseite des Reibungskolbens 13 ist eine relativ großvolumige Schmierfett-Vorratskammer 23 ausgebildet. Diese wird an ihrer Außenseite durch die Innenwand 24 des Reibungskolbens 13 und an ihrer Innenseite und im Bereich ihrer axialen Enden durch einen Einsatzkörper 25 begrenzt. Dieser Einsatzkörper 25 liegt mit einem Ringbund 26 an der Stirnseite 27 des Reibungskolbens 13 und dem hierzu benachbarten Bereich der Innenwand 24 an, so daß er hier zum einen radial und zum anderen axial in Richtung zur Gelenkbüchse 8 gegenüber dem Reibungskolben 13 festgelegt ist.

An seinem anderen, der Gelenkbüchse 8 zugewandten Ende weist der Einsatzkörper 25 einen Zylinderabschnitt 28 auf, in dem eine Ringnut 29 ausgebildet ist. In dieser befindet sich eine O-Ring-Dichtung 30, die gegen die Innenwand 24 des Reibungskolbens 13 anliegt und zwar im Bereich des Gegenhalteflansches 14, der der Gelenkbüchse 8 nächstgelegen ist. Die Vorratskammer 23 erstreckt sich also etwa über die gesamte axiale Erstreckung des Reibungskolbens 13.

An den Zylinderabschnitt 28 schließen sich zwei Befestigungsstege 31 an, die jeweils einen widerhakenartigen radial nach außen vorspringenden Vorsprung 32 aufweisen, der jeweils in montiertem Zustand des Einsatzkörpers 25 in eine entsprechende Ausnehmung 33 im Rohr 10 des Stößels 2 einrastet. Die Befestigungsstege 31 sind so ausgebildet, daß sie beim Einschieben des Einsatzkörpers 25 in den Stößel 2 radial nach innen elastisch ausgelenkt werden. Dies ist dadurch möglich, daß der gesamte Einsatzkörper 25 einstückig aus einem geeigneten elastischen Kunststoff hergestellt wird. Die Ausnehmungen 33 können gleichzeitig als Entlüftungsöffnungen dienen, so daß die Entlüftungsöffnung 12 als zusätzliche Öffnung entfallen kann.

Im Reibungskolben 13 sind im Bereich der Auflage-Abschnitte 18, 19 Schmierfett-Kanäle 34 ausgebildet, die die Vorratskammer 23 mit den Reibungsbelägen 20 bzw. 21 verbinden. Der Durchmesser d dieser Kanäle beträgt etwa 1,0 bis 1, 5 mm, wobei sich der Durchmesser d und die Zahl der Kanäle 34 pro Auflage-Abschnitt 18 bzw. 19 im wesentlichen nach der Viskosität des in der Vorratskammer 23 befindlichen Schmierfettes 35 richtet.

Es ist nicht zweckmäßig, den Durchmesser d der Kanäle 34 nennenswert größer als 1,5 mm zu machen, da sonst die Reibungsbeläge 20, 21 mangels Abstützung im Bereich der Kanäle 34 ihr Reibverhalten gegenüber der Innenwand 36 des Gehäuses 1 verändern würden.

Das Schmierfett 35 wandert durch die Kanäle 34 in den Bereich der Auflage-Abschnitte 18, 19 und von dort durch die Reibungsbeläge 20, 21 hindurch zur Reibfläche zwischen den Reibbelägen 20, 21 und der Innenwand 36 des Gehäuses 1. Um dies zu ermöglichen, ist der die Reibungsbeläge 20, 21 bildende Schaumstoff zumindest teilweise offenzellig ausgebildet, was gerade bei Polyuretan-Schaumstoff der Fall ist.

Am inneren Ende des Einsatzkörpers 25 ist an diesem einstückig ein Verlängerungsstutzen 37 angeformt, der sich axial um ein Maß a über den endseitigen Gegenhalteflansch 17 erstreckt, das etwa der axialen Länge b der Reibungsbeläge 20 bzw. 21 entspricht. Durch diesen Verlängerungsstutzen 37, den zugeordneten Gegenhalteflansch 17 und die Innenwand 36 des Rohres 3 wird eine Schmierfett-Sammelkammer 38 gebildet.

Das Rohr 3 ist an seinem offenen Ende mit einer nach innen gerichteten Sicke 39 versehen, die nach dem Einschieben des Stößels 2 in das Gehäuse 1 angebracht wird, um ein unbeabsichtigtes Ausziehen des Stößels 2 aus dem Gehäuse 1 zu verhindern.

Der Einsatzkörper 25 ist hohl, also etwa rohrförmig ausgebildet, so daß der Innenraum 40 des Gehäuses 1 mit dem Innenraum 41 des Stößels 2 verbunden ist; bei oszillierenden Bewegungen des Stößels 2 relativ zum Gehäuse 1 erfolgt also keine Kompression der im Reibungsdämpfer befindlichen Luft; es kann vielmehr eine ständig wechselnde Luftströmung aus dem Reibungsdämpfer hinaus bzw. in diesen hinein über die Entlüftungsöffnung 12 und/oder die Ausnehmungen 33 erfolgen.

Wenn die Durchlässigkeit des Reibungsbelages 20, 21 nicht ausreichend ist, um genügend Schmierfett 35 aus der Vorratskammer 23 zum Reibungsbereich zwischen dem Reibungsbelag 20 bzw. 21 einerseits und der Innenwand 36 des Gehäuses 1 andererseits zu transportieren, dann kann es zweckmäßig sein, in den bzw. die Reibungsbeläge 20, 21 mindestens eine Öffnung 42, beispielsweise durch Stanzen, einzubringen. Eine solche Öffnung 42 sollte derart angeordnet sein, daß sie sich mit mindestens einem Schmierfett-Kanal 34 zumindest teilweise überdeckt, so daß der Schmierfett-Transport sichergestellt ist. Hierzu ist es zweckmäßig, wenn ihre Weite bzw. ihr Durchmesser e gleich oder größer dem Durchmesser d des Kanals 34 ist. Außerdem sollte die Öffnung 42 in der Ebene eines Kanals 34 angeordnet sein.

## Patentansprüche

1. Reibungsdämpfer, insbesondere für Waschmaschinen mit Schleudergang, bestehend aus einem im wesentlichen kreiszylindrischen Gehäuse (1) und einem koaxial in diesem verschiebbaren, mit einem Ende aus dem Gehäuse (1) herausgeführten und am anderen Ende mit einem etwa zylindrischen Reibungskolben (13) versehenen Stößel (2), wobei der Reibungskolben (13) mindestens einen etwa kreiszylindrischen Auflage-Abschnitt (18, 19) und diesen radial überragende und axial abstandsunveränderbar begrenzende Gegenhalteflansche (14 bis 17) aufweist, wobei auf dem Auflage-Abschnitt (18, 19) und zwischen den Gegenhalteflanschen (14 bis 17) ein elastisch gegen die Innenwand (36) des Gehäuses (1) angedrückter Reibungsbelag (20, 21) aus elastisch nachgiebigem Material angeordnet ist, und wobei am Reibungskolben (13) eine Schmierfett-Vorratskammer (23) ausgebildet ist, dadurch gekennzeichnet, daß die Schmierfett-Vorratskammer (23) innerhalb des Reibungskolbens (13) ausgebildet und über jeweils mindestens einen Schmierfett-Kanal (34) mit dem jeweiligen Auflage-Abschnitt (18, 19) verbunden ist.

2. Reibungsdämpfer nach Anspruch 1, dadurch gekennzeichnet, daß die Schmierfett-Vorratskammer (23) durch einen im Reibungskolben (13) befindlichen Einsatzkörper (25) begrenzt wird.

3. Reibungsdämpfer nach Anspruch 2, dadurch gekennzeichnet, daß der Einsatzkörper (25) gegen die dem Innenraum (40) des Gehäuses (1) zugewandte Stirnseite (27) des Stößels (2) anliegt.

4. Reibungsdämpfer nach Anspruch 2, dadurch gekennzeichnet, daß der Einsatzkörper (25) mittels widerhakenartiger, in Ausnehmungen (33) des Stößels (2) eingreifender Befestigungsstege (31) mit dem Stößel (2) elastisch verriegelt ist.

5. Reibungsdämpfer nach Anspruch 2, dadurch gekennzeichnet, daß der Einsatzkörper (25) im Bereich seines dem Innenraum (41) des Stößels (2) zugewandten Endes gegenüber der Innenwand (24) des Reibungskolbens (13) abgedichtet ist.

6. Reibungsdämpfer nach Anspruch 1, dadurch gekennzeichnet daß der mindestens eine Schmierfett-Kanal einen Durchmesser (d) von etwa 1,0 bis 1,5 mm aufweist.

7. Reibungsdämpfer nach einem Ansprüche 1 bis 6, dadurch gekennzeichnet, daß an dem im Gehäuse (1) befindlichen Ende des Stößels (2) ein Verlängerungsstutzen (37) vorgesehen ist, der gemeinsam mit dem benachbarten Gegenhalteflansch (17) und der Innenwand (36) des Gehäuses (1) eine Schmierfett-Sammelkammer (38) begrenzt.

8. Reibungsdämpfer nach Anspruch 7, dadurch gekennzeichnet, daß der Verlängerungsstutzen (37) am Einsatzkörper (25) ausgebildet ist.

9. Reibungsdämpfer nach Anspruch 1, dadurch gekennzeichnet, daß der Reibungsbelag (20, 21) aus zelligem geschäumten Kunststoff besteht.

10. Reibungsdämpfer nach Anspruch 9, dadurch gekennzeichnet, daß der Reibungsbelag (20, 21) aus zumindest teilweise offenzelligem geschäumten Kunststoff besteht.

11. Reibungsdämpfer nach Anspruch 1, dadurch gekennzeichnet, daß der Reibungsbelag (20, 21) mindestens eine vom Auflage-Abschnitt (18, 19) bis zur Innenwand (36) des Gehäuses (1) durchgehende Öffnung (42) aufweist.

12. Reibungsdämpfer nach Anspruch 11, dadurch gekennzeichnet, daß die mindestens eine Öffnung (42) sich zumindest teilweise mit einem Schmierfett-Kanal (34) überdeckt.

13. Reibungsdämpfer nach Anspruch 11, dadurch gekennzeichnet, daß die Weite (e) der Öffnung (42) mindestens gleich dem Durchmesser (d) des Schmierfett-Kanals (34) entspricht.

## Claims

1. Frictional damper, in particular for washing machines with spinning action, comprising a substantially circular cylindrical housing (1) and a tappet (2) which is coaxially displaceable inside the latter and extends out of the housing (1) with one end, another end of the tappet (2) being provided with an approximately cylindrical friction piston (13), the friction piston (13) having at least one approximately circular cylindrical support segment (18, 19) and bracing flanges (14 to 17) extending radially to the axis (7) beyond the support segment (18, 19) and limiting the support segment (18, 19) at fixed distances in the direction of the axis (7), a friction coating (20, 21) made of an elastically resilient material being disposed on the support segment (18, 19) and between the bracing flanges (14 to 17) and being elastically pressed against the inner wall (36) of the housing (1), and a grease storage chamber (23) being formed on the friction piston (13), characterized in that the grease storage chamber (23) is provided within the friction piston (13) and is connected with the respective support segment (18, 19) by way of at least one grease channel (34).

2. Frictional damper in accordance with claim 1, characterized in that the grease storage chamber (23) is defined by an insert body (25) located in the friction piston (13).

3. Frictional damper in accordance with claim 1, characterized in that the insert body (25) bears against the front end (27) of the tappet (2) facing the interior space (40) of the housing (1).

4. Frictional damper in accordance with claim 2, characterized in that the insert body (25) is elastically interlocking with the tappet (2) by means of barbed-hook-type fastening webs (31) engaging with recesses (33) of the tappet (2).

5. Frictional damper in accordance with claim 2, characterized in that in the vicinity of its end facing the interior space (41) of the tappet (2), the insert body (25) is sealed towards the inner wall (24) of the friction piston (13).

6. Frictional damper in accordance with claim 1, characterized in that the at least one grease channel (34) has a diameter (d) of about 1.0 to 1.5 mm.

7. Frictional damper in accordance with claims 1 to 6, characterized in that an extension tube (37) is formed on the end of the tappet (2) located inside the housing (1), which extension tube (37, together with the adjacent bracing flange (17) and the inner wall (36) of the housing (1), defines a grease collecting chamber (38).

8. Frictional damper in accordance with claim 7, characterized in that the extension tube (37) is formed on the insert body (25).

9. Frictional damper in accordance with claim 1, characterized in that the friction coating (20, 21) consists of cellular, foamed plastics material.

10. Frictional damper in accordance with claim 9, characterized in that the friction coating (20, 21) consists of at least partially open-cell, foamed plastics material.

11. Frictional damper in accordance with claim 1, characterized in that the friction coating (20, 21) has at least one opening (42) passing from the support segment (18, 19) to the inner wall (36) of the housing (1).

12. Frictional damper in accordance with claim 11, characterized in that the at least one opening (42) at least in part overlaps a grease channel (34).

13. Frictional damper in accordance with claim 11, characterized in that the width (e) of the opening (42) equals at least the diameter (d) of the grease channel (34).

## Revendications

1. Amortisseur à friction, en particulier pour des machines à laver avec essorage, composé d'une boîte (1) essentiellement cylindrique circulaire et d'un poussoir (2) déplaçable dans celle-ci, dont une extrémité sort de la boîte (1) et dont l'autre extrémité est pourvue d'un piston à friction (13) environ cylindrique, le piston à friction (13) présentant au moins un segment de support (18, 19) environ cylindrique circulaire et des collerettes en contrefiche (14 à 17) qui dépassent celui-ci radialement et le définent à espacements invariables dans le sens axial, une couche à friction (20, 21) en matière élastiquement souple, qui serre contre la paroi intérieure (36) de la boîte (1), étant arrangée sur le segment de support (18, 19) et entre les collerettes en contrefiche (14 à 17), et un réservoir de lubrifiant (23) étant formé sur le piston à friction (13), caractérisé en ce que le réservoir de lubrifiant (23) est formé à l'intérieur du piston à friction (13) et rattaché au segment de support (18, 19) respectif par la voie d'au moins un conduit de lubrifiant (34).

2. Amortisseur à friction selon la revendication 1, caractérisé en ce que le réservoir de lubrifiant (23) est défini par un insert (25) situé à l'intérieur du piston à friction (13).

3. Amortisseur à friction selon la revendication 2, caractérisé en ce que l'insert (25) s'appuie contre la face (27) du poussoir (2) tournée vers l'intérieur (40) de la boîte (1).

4. Amortisseur à friction selon la revendication 2, caractérisé en ce que l'insert (25) et le poussoir (2) sont verrouillés réciproquement de façon élastique par le moyen de barrettes de fixation (31) en forme de barbes qui sont formées sur l'insert (25) et qui engrènent avec des creux (33) du poussoir (2).

5. Amortisseur à friction selon la revendication 2, caractérisé en ce que dans la zone de son extrémité faisant face à l'intérieur (41) du poussoir (2), l'insert (25) est étanché par rapport à la paroi intérieure (24) du piston à friction (13).

6. Amortisseur à friction selon la revendication 1, caractérisé en ce que l'au moins un conduit de lubrifiant présente une diamètre (d) d'environ 1,0 à 1,5 mm.

7. Amortisseur à friction selon l'une quelconque des revendications 1 à 6, caractérisé en ce qu'un tuyau de rallonge (37) est prévu à l'extrémité du poussoir (2) situé dans la boîte (1), lequel se combine avec la collerette en contrefiche (17) voisine et la paroi intérieure de la boîte (1) pour définir un collecteur de lubrifiant (38).

8. Amortisseur à friction selon la revendication 7, caractérisé en ce que le tuyau de rallonge (37) est formé sur l'insert (25).

9. Amortisseur à friction selon la revendication 1, caractérisé en ce que la couche à friction (20, 21) consiste en matières plastiques alvéolées moussées.

10. Amortisseur à friction selon la revendication 9, caractérisé en ce que la couche à friction (20, 21) consiste en matières plastiques moussées au moins partiellement à alvéoles ouvertes.

11. Amortisseur à friction selon la revendication 1, caractérisé en ce que la couche à friction (20, 21) présente au moins une ouverture (42) qui passe du segment de support (18, 19) jusqu'à la paroi intérieure (36) de la boîte (1).

12. Amortisseur à friction selon la revendication 11, caractérisé en ce que la au moins une ouverture (42) se recouvre du moins partiellement avec un conduit de lubrifiant (34).

13. Amortisseur à friction selon la revendication 1, caractérisé en ce que la largeur (e) de l'ouverture (42) du moins égale le diamètre (d) du conduit de lubrifiant (34).
